# FASCICULE DE BREVET EUROPEEN

(11) **EP 0 696 728 B1**
(45) Date de publication et mention de la délivrance du brevet: **14.10.1998**
(21) Numéro de dépôt: 95401860.2
(22) Date de dépôt: 08.08.1995
(51) Int. Cl.: G01L 1/16, G01P 15/10, G01L 1/10

(54) **Transducteur force-fréquence à poutres vibrantes et application de la force au milieu**
Kraft-Frequenz-Wandler mit vibrierenden Balken und Mittenkraftangriff
Force-frequency transducer with vibrating beams application of force in the centre

(30) Priorité: 10.08.1994 FR 9409908
(43) Date de publication de la demande: 14.02.1996
(73) Titulaire: SAGEM S.A., 75016 Paris (FR)
(72) Inventeur: Amand, Yvon, F-95290 L'Isle Adam (FR); Peghaire, Jean-Pierre, F-95100 Argenteuil (FR)
(74) Mandataire: Fort, Jacques

(56) Documents cités:
- EP-A- 0 030 741
- EP-A- 0 373 040

## Description

L'invention concerne les transducteurs force-fréquence à poutres vibrantes qui permettent de constituer des appareils de mesure de force ayant une masse et un volume très faibles.

Elle concerne de façon plus précise les transducteurs du type comprenant une lame allongée de forme plate, destinée à être interposée entre des éléments d'application d'une force longitudinale à la lame, ladite lame constituant, dans sa partie médiane, deux poutres latérales séparées par un intervalle, reliées par les parties terminales de la lame et portant des moyens de mise en vibration des poutres dans le plan des grandes faces de la lame et de mesure de la fréquence de vibration.

Un tel transducteur permet de mesurer la force de traction ou de compression appliquée aux poutres. Il trouve une application particulièrement importante, bien que non-exclusive, dans les accéléromètres pendulaires non-asservis comportant une masse sismique pendulaire reliée à un socle par une articulation lui permettant de débattre dans une direction de sensibilité qui est perpendiculaire à l'articulation. Les éléments d'application de la force longitudinale sont alors constitués par le socle et la masse sismique.

On connaît déjà de nombreux transducteurs du type ci-dessus. Dans ces transducteurs, les parties terminales sont prévues pour être fixées aux éléments d'application de la force. On trouvera un exemple de réalisation dans les documents US-A-3 238 789 et FR-A-2 454 614 (US Department of Energy). La figure 1 de la présente demande, où l'échelle n'est pas respectée pour plus de clarté, montre la partie mécanique d'un tel transducteur, monté entre un socle 12 et une masse sismique pendulaire 14 reliée au socle par une charnière 16. Le transducteur est constituée par une lame allongée en quartz dont les parties terminales ont une liaison assimilable à un encastrement avec le socle et la masse sismique pendulaire. Dans la partie médiane de la lame, une fente 18 sépare deux poutres latérales 24a et 24b. En général, la lame est constituée en matériau piézo-électrique, par exemple en quartz, et les moyens de mise en vibration des poutres dans leur plan sont constitués par des électrodes non-représentées, reliées à un circuit d'alimentation et de mesure.

Les deux poutres ne peuvent pas être rendues absolument identiques l'une à l'autre et en conséquence ont intrinséquement des fréquences propres légèrement différentes l'une de l'autre. Pour des transducteurs miniatures, réalisés par photolithographie, ayant une fréquence propre d'environ 35 KHz, la fréquence propre f0a de l'une des poutres peut différer de quelques dizaines de Hz de la fréquence propre f0b de l'autre poutre. Du fait du couplage entre les poutres, elles vibrent à une seule fréquence f0, intermédiaire entre f0a et f0b. Cette fréquence est légèrement différente de la fréquence propre naturelle de chaque poutre ce qui provoque une baisse sensible du coefficient de surtension **Q** des poutres.

Une autre effet de cette dissymétrie est que les forces parasites susceptibles de s'appliquer orthogonalement à l'axe sensible **x**, notamment dans la direction **z** parallèle au plan de la lame, ont une influence différente, sur les poutres.

Si une telle force parasite Fz est exercée suivant l'axe **z** à la racine des poutres, cette force se traduit par une traction dans l'une des poutres et une compression sur l'autre, d'autant plus importantes que la distance entre les poutres est faible. Sous l'effet de tels efforts parasites, la fréquence intrinsèque f0b augmente sous l'effet de la traction et la fréquence intrinsèque f0a diminue sous l'effet de la compression. La force **F**, suivant le sens de son application, peut, soit renforcer le déséquilibre initial, soit tendre à l'annuler. Dans le premier cas, le facteur **Q** diminue, et dans le second il augmente et tend à atteindre son maximum. Dans les deux cas il y a glissement de fréquence et donc erreur directe en sortie. Ces phénomènes sont quadratiques : si la force est doublée, le glissement de fréquence est quadruplé.

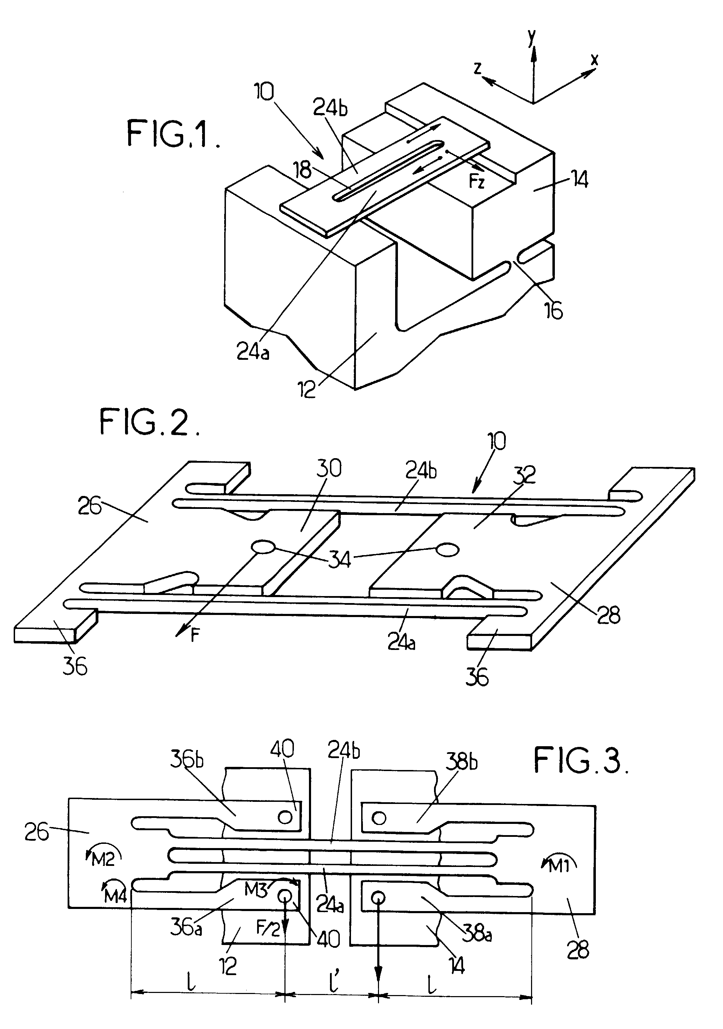

L'apparition de tels efforts parasites au niveau des zones de fixation est inévitable. Dans le cas du montage montré en figure 1, toute dissymétrie entre les extrémités de la charnière 16 entraîne par exemple une dissymétrie de leur raideur. Lors des variations de température, un couple variable apparaît dans les parties terminales autour de l'axe **y** et entraîne une variation parasite de la fréquence f0 du transducteur.

On a déjà proposé de réduire ces défauts en équilibrant les poutres par dépôt d'or et vaporisation partielle par des tirs laser. Cette solution n'est pas totalement satisfaisante. La surcharge d'or sur les poutres abaisse le coefficient de surtension. Les couches d'or volatilisées perturbent les couches superficielles de quartz sous-jacent et entraînent également une baisse du coefficient de surtension. L'équilibrage des fréquences propres à une température déterminée n'écarte pas les inconvénients nés de la différence de longueur des poutres.

La présente invention vise à fournir un transducteur force-fréquence du genre ci-dessus défini dans lequel les transferts d'effort parasites vers les poutres à partir des éléments d'application de force sont réduits.

Dans ce but, l'invention propose notamment un transducteur conformément à la revendication 1.

Cette disposition permet de ne pas perturber l'inévitable déséquilibre initial entre les poutres et d'éviter des variations de fréquence propre globale provoquées notamment par l'application de forces parasites suivant la direction **z**.

On peut également considérer que cela revient à interposer une liaison souple entre les extrémités des poutres et les parties de la lame qui sont fixées aux éléments d'application des forces.

Dans un premier mode de réalisation de l'invention, le prolongement de chaque partie terminale est en forme de fourche et encadre l'ensemble des deux poutres, ce qui permet de ne séparer les deux poutres que par une fente étroite et donc de garantir un couplage étroit entre elles. Dans un autre mode de réalisation, les prolongements des deux parties terminales sont placés entre les poutres, ce qui permet de réduire la longueur globale du transducteur.

Les caractéristiques ci-dessus ainsi que d'autres apparaîtront mieux à la lecture de la description qui suit de modes particuliers de réalisation, donnés à titre d'exemples non-limitatifs. La description se réfère aux dessins qui l'accompagnent, dans lesquels :
- la figure 1, déjà mentionnée, est une vue en perspective très simplifiée montrant le montage d'un transducteur force-fréquence connu sur un accéléromètre ;
- la figure 2 est une vue en perspective d'un transducteur constituant un premier mode de réalisation, les électrodes n'étant pas représentées et l'échelle n'étant pas respectée pour plus de clarté;
- la figure 3 montre schématiquement, en vue de dessus, un transducteur suivant un autre mode de réalisation de l'invention, également en matériau piézo-électrique, avec une indication de l'effet d'une force parasite particulière ;
- les figures 4a et 4b sont des schémas de principe destinés à montrer les paramètres qui interviennent dans un transducteur de type connu (fig. 4a) et dans un transducteur suivant un mode de réalisation de l'invention (fig. 4b) ;
- les figures 5 et 6 sont respectivement une vue de dessus et une vue de dessous d'un transducteur selon le schéma de la figure 2 ; et
- la figure 7, similaire à la figure 3, montre schématiquement un autre mode encore de réalisation.

Le transducteur montré schématiquement en figure 2 est constitué par une lame monolithique constituant résonateur, en matériau piézo-électrique, généralement en quartz. Cette lame peut être considérée comme ayant deux parties terminales 26 et 28 reliées par deux poutres parallèles 24a et 24b, séparées par un intervalle. Pour constituer un transducteur miniature, on utilise une lame de faible épaisseur, généralement de l'ordre du dixième de millimètre.

Les parties terminales 26 et 28 présentent des prolongements 30 et 32 dirigés vers le plan médian de la lame, situés entre les poutres dans le cas de la figure 2.

Les extrémités des prolongements sont prévus pour être fixées aux éléments d'application des efforts de compression et de traction par des liaisons assimilables à des encastrements : ces extrémités plates peuvent par exemple être appliquées sur des faces correspondantes des éléments d'application d'effort à l'aide d'axes traversant des trous 34 ou être collées. Entre ces extrémités et les parties terminales, les prolongements peuvent présenter une zone étranglée augmentant la souplesse transversale du raccordement entre les éléments et les poutres vibrantes. Des moignons 36 peuvent être prévus de part et d'autre des parties terminales pour assurer une certaine symétrie aux pieds des poutres. Les prolongements 30 et 32 jouent le rôle de charnières et leur souplesse tend à découpler le double diapason formé par les poutres et les parties terminales des contraintes parasites externes.

Le découpage de la lame dans une feuille de quartz plate et le découpage des fentes séparant les poutres des prolongements peuvent être réalisés par photolithographie, suivant un processus bien maîtrisé et permettant la fabrication par lots. La photolithographie permet de réaliser des fentes 18 très minces, ayant une épaisseur inférieure au dixième de millimètre.

Dans le mode de réalisation schématisé en figure 3, où les éléments correspondant à ceux de la figure 2 sont désignés par le même numéro de référence, les poutres vibrantes 24a et 24b sont situées à l'intérieur d'un cadre formé par des prolongements externes 36a, 36b, 38a, 38b des parties terminales 26 et 28. Dans ce cas encore, les prolongements ou pattes présentent une extrémité destinée à être fixée à plat contre les éléments d'application de la force à mesurer. Les prolongements ou pattes peuvent avoir une partie rétrécie à proximité de leur emplanture pour augmenter leur souplesse et réduire la sensibilité du double diapason aux contraintes parasites extérieures.

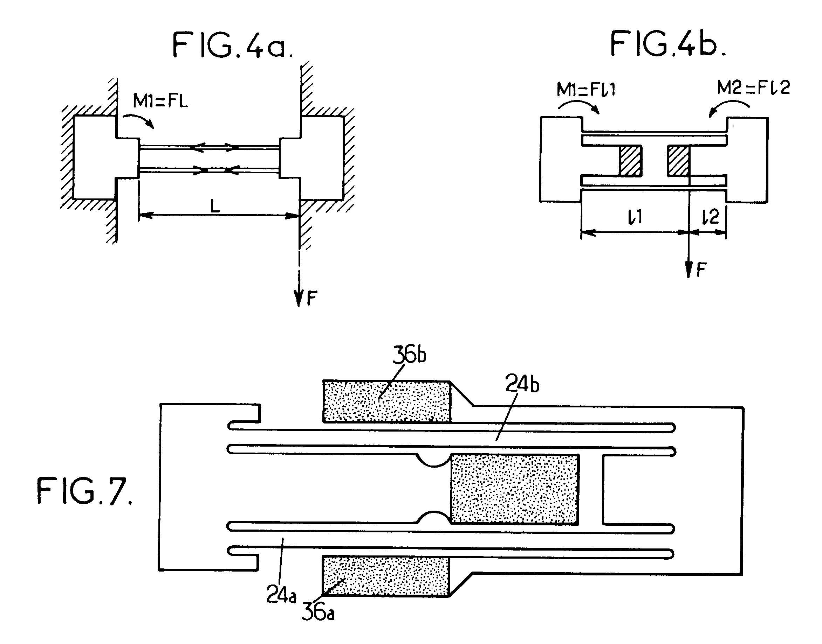

La figure 4a représente très schématiquement un transducteur fixé suivant l'art antérieur. Les poutres sont soumises, à l'encadrement, à un couple M1 égal à FxL, induisant de la traction dans la poutre supérieure et de la compression dans l'autre.

La figure 4b représente, de la même manière, un transducteur selon l'un des principes de l'invention, plus détaillé en figure 2. Dans ce cas, deux couples antagonistes sont imposés aux poutres. Soit M2 = F*l*2 et M1 = F*l*1. La résultante de ces contraines parasites est donc réduite à la différence M1 - M2 = F(*l*1 - *l*2). On a donc considérablement réduit l'effet des efforts parasites, d'autant que ces forces et couples induisent des glissements de fréquence suivant une loi quadratique. Le gain est donc très important, et on arrive à des niveaux bas de glissement de fréquence, bien qu'en théorie c'est lorsque *l*1 = *l*2 que la force F n'a plus aucune influence.

Une étude similaire montrerait que l'on arrive sensiblement au même résultat dans le cas d'une force F appliquée au transducteur de la figure 2.

Aussi bien dans le cas de la figure 2 que dans celui de la figure 3, un avantage supplémentaire par rapport au montage traditionnel consiste en ce que les zones de fixation sont rapprochées l'une de l'autre : la différence de dilatation entre le matériau constitutif du transducteur, par exemple en quartz, et les éléments d'application d'effort, généralement en métal, ne porte que sur une longueur réduite. L'incidence des variations de température est très atténuée.

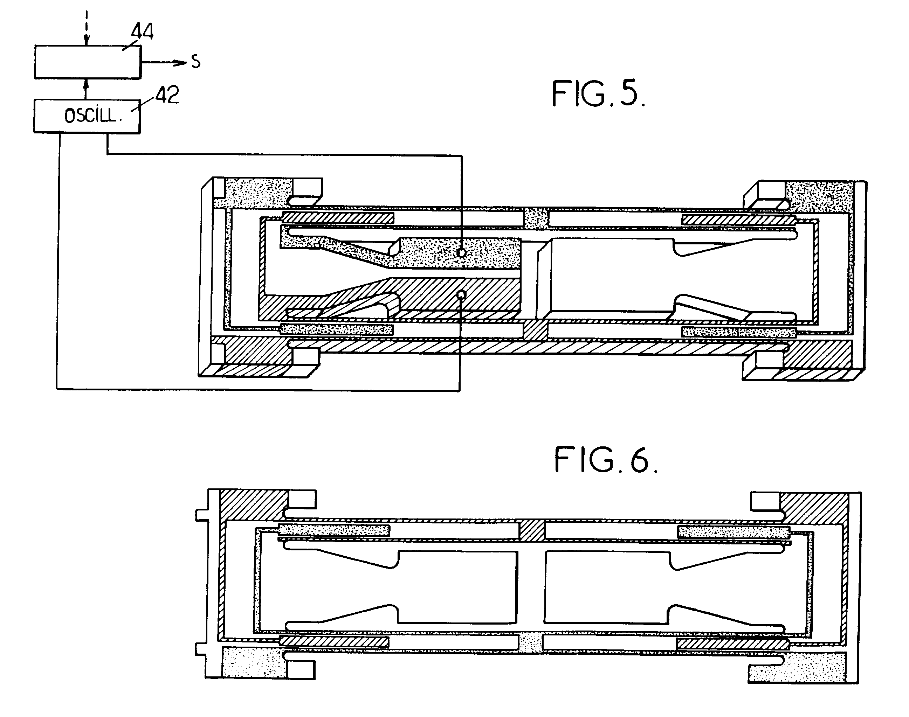

Les figures 5 et 6 montrent une disposition possible des électrodes de mise en vibration des poutres dans le plan de la lame. Ces électrodes sont constituées par des métallisations et réparties en deux groupes, suivant une disposition qui, sur la face supérieure, est similaire à celle déjà décrite dans le document FR-A-2 640 045 auquel on pourra se reporter. Dans le cas illustré sur la figure 6, les électrodes inférieures reproduisent la disposition des électrodes supérieures, les liaisons nécessaires s'effectuant par la tranche de la lame. Mais on pourrait aussi bien prévoir, sur la face inférieure des poutres, une métallisation reliée à la masse.

Toutes les électrodes d'un même groupe sont reliées à l'une des deux sorties d'un oscillateur 42 qui s'accorde sur la fréquence propre des poutres, mesurée par un fréquencemètre 44. On peut utiliser un montage différentiel comportant deux transducteurs du genre montré sur les figures 5 et 6, le fréquencemètre 44 mesurant alors par battements la différence entre les fréquences de deux transducteurs identiques dont l'un est soumis à la force à mesurer et dont l'autre (dont la sortie est indiquée par une flèche en tirets sur la figure 5) n'est soumis à aucune force ou à une force égale, mais de sens opposé.

Pour plus de clarté, les électrodes appartenant à l'un des groupes sont représentées sur les figures 5 et 6 en un grisé différent de celui des électrodes appartenant à l'autre jeu.

Dans le mode de réalisation montré en figure 7, où les zones de fixation sont représentées par des surfaces tramées, la partie terminale 26 présente des prolongements externes 36a et 36b dirigés vers le plan médian, dont les extrémités sont prévues pour être fixées. La partie terminale 28 présente, elle, un seul prolongement central 32, dirigé également vers le plan médian.

L'invention est susceptible de nombreuses variantes de réalisation. En particulier, la lame peut être constituée en un matériau piézo-électrique autre que le quartz. Elle peut être également en silicium dopé, avec excitation électrostatique ou à l'aide d'une couche de matériau piézo-électrique mince déposée sur la lame. La lame peut comporter, en plus des poutres latérales constituant un double diapason, des éléments supplémentaires, lui donnant une constitution qu'on peut qualifier de tripoutre telle que celle du document GB-A-21 41 231.

## Revendications

1. Transducteur force-fréquence à poutres vibrantes comprenant une lame allongée de forme plate, destinée à être interposée entre des éléments d'application d'une force longitudinale à la lame, ladite lame constituant, dans sa partie médiane, deux poutres latérales (24a,24b) séparées par un intervalle, reliées par les parties terminales de la lame et portant des moyens de mise en vibration des poutres dans le plan des grandes faces de la lame et de mesure de la fréquence de vibration,
caractérisé en ce que lesdites parties terminales comportent des prolongements (30,32 ; 36a,36b,38a,38b), parallèles aux poutres, dirigés vers le milieu de la lame dans le sens longitudinal, et munis de moyens destinés à les relier auxdits éléments en des zones plus rapprochées l'une de l'autre que ne le sont les parties terminales.

2. Transducteur selon la revendication 1, caractérisé en ce que le prolongement de chaque partie terminale est en forme de fourche et encadre l'ensemble des deux poutres.

3. Transducteur selon la revendication 1, caractérisé en ce que les prolongements (30,32) des deux parties terminales sont placés entre les poutres (24a,24b).

4. Transducteur selon la revendication 1, 2 ou 3, caractérisé en ce que les prolongements ont une longueur sensiblement égale à la distance entre lesdites zones.

5. Transducteur selon l'une quelconque des revendications précédentes, caractérisé en ce que la lame est en matériau piézo-électrique et en ce que les poutres portent des électrodes appartenant aux moyens de mise en vibration.

## Patentansprüche

1. Kraftfrequenzwandler mit vibrierendem Balken, der ein längliches, flach ausgebildetes Plättchen umfaßt, das dafür vorgesehen ist, zwischen die Aufnahmeelemente einer auf das Plättchen wirkenden Längskraft gelegt zu werden, wobei das Plättchen in seinem mittleren Bereich zwei seitliche Balken (24a,24b) umfaßt, die durch einen Zwischenraum getrennt sind und über die Endbereiche des Plättchens verbunden sind, und das die Einrichtungen zum Versetzen der Balken in Vibration in der Ebene der Flachseite des Plättchens und zur Messung der Frequenz der Vibration trägt,
**dadurch gekennzeichnet, daß**
die Endbereiche Verlängerungen (30,32;36a,36b,38a,38b) umfassen, die parallel zu den Balken und in Längsrichtung auf die Mitte des Plättchens zugerichtet sind, und die mit Einrichtungen versehen sind, die dazu dienen, diese mit den besagten Aufnahmeelementen in den Bereichen zu verbinden, die sehr nahe zueinander liegen und die nicht die Endbereiche sind.

2. Wandler nach Anspruch 1, **dadurch gekennzeichnet, daß** die Verlängerung eines jeden Endbereichs in Form einer Gabel ausgeführt ist und von der Anordnung der zwei Balken umschlossen ist.

3. Wandler nach Anspruch 1, **dadurch gekennzeichnet, daß** die Verlängerungen (30, 32) der beiden Endpartien zwischen den Balken (24a,24b) angeordnet sind.

4. Wandler nach einem der Ansprüche 1, 2 oder 3, **dadurch gekennzeichnet, daß** die Verlängerungen eine über die Entfernung zwischen den besagten Aufnahmebereichen gleichmäßig empfindliche Länge haben.

5. Wandler nach einem der vorhergehenden Ansprüche, **dadurch gekennzeichnet, daß** das Plättchen aus einem piezoelektrischen Material ist und daß die Balken die zu den Schwingungseinrichtungen gehörenden Elektroden tragen.

## Claims

1. Vibrating beam force-frequency transducer comprising a flat elongated blade to be located between elements which apply a longitudinal force to the blade, said blade having, in a middle portion thereof, two lateral beams (24a,24b) separated by a gap, connected by the end portions of the blade and carrying means for vibrating the beams in the plane of the major surfaces of the blade and for measuring the vibration frequency,
characterized in that said end portions comprise extensions (30,32;36a,36b,38a,38b), parallel to the beams, directed toward the middle portion of the blade in the longitudinal direction, and provided with means for connecting them to said elements in zones that are closer to each other than are the terminal portions.

2. Transducer according to claim 1, characterized in that the extension of each end portion is fork-shaped and straddles both beams.

3. Transducer according to claim 1, characterized in that the extensions (30,32) of the two end portions are located between the beams (24a,24b).

4. Transducer according to claim 1, 2 or 3, characterized in that the extensions have a length substantially equal to the distance between said zones.

5. Transducer according to any one of the preceding claims, characterized in that the blade is of piezzoelectric material and in that the beams carry electrodes belonging to said means for vibrating the beams.
